# EUROPEAN PATENT SPECIFICATION

(11) **EP 4 251 905 B1**
(45) Date of publication and mention of the grant of the patent: **16.04.2025**
(21) Application number: 21806029.1
(22) Date of filing: 22.10.2021
(51) Int. Cl.: F16J 15/3208, F16J 15/3224, F16J 15/3232, F16J 15/328, B29C 45/00, B29C 43/18, B29C 43/34, B29K 21/00, B29K 705/00, B29L 31/26

(54) **SEALING GASKET FOR ROTARY SHAFTS**
DICHTUNG FÜR ROTIERENDE WELLEN
GARNITURE DE SCELLEMENT POUR ARBRES ROTATIFS

(30) Priority: 30.11.2020 IT 202000028922
(43) Date of publication of application: 04.10.2023
(73) Proprietor: CARCO - PRECISION RUBBER PRODUCTS S.p.A., 20122 Milano (MI) (IT)
(72) Inventor: ROMAGNOLI, Enrico, 20122 Milano (IT); VIOLA, Valerio, 20122 Milano (IT); LORENZI, Bruno, 20122 Milano (IT)
(74) Representative: Tansini, Elio Fabrizio
(86) International application number: PCT/IB2021/059756
(87) International publication number: WO 2022/112880

(56) References cited:
- CN-U- 211 778 971
- DE-U1- 202016 003 040
- US-B2- 9 869 395
- US-B2- 9 879 782

## Description

The present invention relates to a sealing gasket for rotary shafts.

In particular, the sealing gasket in question is conveniently usable, for example, on large rotary shafts.

As is known, in many mechanical applications a hermetic or substantially hermetic isolation is required between two environments mutually delimited by a partition wall, rotatably crossed by a rotary shaft. Such a circumstance can occur, for example, in the case of transmission shafts associated with lubricated mechanical parts, where it is necessary to prevent the lubricant enclosed in a housing casing of the same mechanical parts from being drawn out of the opening crossed by the shaft. Similarly, in the case of mechanisms operating under submerged conditions, a barrier may be required at the input of liquids inside the casing crossed by the shaft.

In this regard, different types of sealing gaskets are known, in which a static portion is typically included, suitable for fixing in a special seat arranged in the partition wall around the opening crossed by the shaft, and a dynamic portion operating in a sliding contact relationship on the external surface of the shaft itself, to hinder the passage of fluids.

A known exemplary sealing gasket is described by CN_211778971-U. An exemplary method for moulding a sealing gasket is described by US_9879782-B2.

Usually, the static portion has a substantially quadrangular profile in diametral semi-section, so as to be easily enclosed between axially opposite surfaces defining the housing seat. The dynamic portion protrudes radially from the static portion according to a substantially truncated conical shape and terminally carries at least one sealing lip which, in operating conditions, is typically suitable for operating in a sliding contact relationship against the rotary shaft, exerting an adequate elastic thrust which can be aided by elastic elements coupled to the dynamic portion.

For various reasons, for example processing tolerances, deformations under load and/or wear of mechanical parts, the rotary shaft can exhibit some misalignment with respect to the central axis of the gasket. The misalignment can consist of a simple eccentricity of the shaft rotation axis with respect to the central axis of the gasket and/or a rotation eccentricity of the shaft.

The gasket must be capable of accommodating such misalignments of the rotary shaft, without suffering significant penalties in terms of functionality.

In the current state of the art, the achievement of this objective is particularly problematic in gaskets dedicated to large machinery, such as wind generators, where the rotary shafts can reach diameters in the order of several tens of centimetres, even up to 6 metres, with eccentricities which can reach values in the order of a few millimetres.

In fact, the Applicant has observed that the current implementation solutions do not allow to adequately accommodate eccentricities of particularly high values. In fact, since the connecting portion tends to significantly modify its elastic reaction in response to minor deformations, the sealing lip can be excessively compressed against the shaft surface, causing an increase in the contact area and thrust forces with consequent increase in friction, overheating and wear, or excessively reducing the contact pressure on the shaft until it is cancelled and contact is lost, compromising the operation of the gasket for the purposes of the hermetic seal.

The oscillations of the shaft also cause a cyclic change in the angle of incidence of the lip on the external surface, resulting in the loss of optimal working conditions for the purposes of the seal.

The object of the present invention is to improve the state of the art, creating a gasket which can be conveniently used even on large shafts, which allows to more effectively accommodate significant eccentricities of the shaft, reducing their effect in terms of increased friction and improving the reliability of the seal even in particularly burdensome operating conditions.

This object and still others, which will better appear in the course of the present disclosure, are substantially achieved by a sealing gasket for rotary shafts, according to claim 1.

In accordance with a further aspect, it is an object of the invention to provide a process for making a sealing gasket for rotary shafts, according to claim 13.

According to the Applicant, the cooperation between the three annular portions and the annular lamina with the three parts integral therewith, makes the sealing edge suitable for following the radial movements of the shaft with respect to the central axis of the gasket, keeping its orientation substantially unchanged with respect to the cylindrical surface against which it restingly acts. Therefore, any variations in the orientation of the sealing edge with respect to the ideal working condition, even in the presence of high eccentricities, are minimized, to the benefit of the effectiveness of the seal and the reduction of friction.

The high extension of the connecting portion and the terminal portion, called to dynamically support any eccentricities, allows to follow the radial movements of the shaft, minimizing the variations in the elastic reaction transmitted through the sealing edge. Consequently, it is possible to operate even in conditions of high eccentricity without producing excessive localized overheating and energy losses due to friction.

The gasket in question behaves better also in the presence of high pressure gradients between the environments delimited thereby. Sudden pressure variations are suitably supported by elastic deformations at the connecting portion which can rotate in the connecting section with the terminal portion without inducing excessive variations in the orientation and contact pressure of the sealing edge.

**In** at least one of the aforesaid aspects, convenient embodiments of the invention can comprise at least one of the following preferred features.

Preferably, said axial delimiting surfaces define a maximum axial dimension of the sealing gasket.

Preferably, said axial delimiting surfaces are configured to be enclosed against containment walls of an anchoring seat.

Preferably, the terminal portion extends from a radially internal end of the connecting portion.

Preferably, the sealing edge radially protrudes from the opposite side with respect to the anchoring portion and away therefrom.

Preferably, the sealing edge radially protrudes towards the central axis.

Preferably, the sealing edge protrudes from a radially internal circumferential wall of the terminal portion.

Preferably, one of said axially opposite lateral surfaces, facing away from the central axis, forms the respective acute angle with a radially internal surface of the anchoring portion.

Preferably, one of said axially opposite lateral surfaces, facing the central axis, forms the respective acute angle with a radially external surface of the terminal portion.

Preferably, each of said proximal part, intermediate part and distal part extends substantially according to the entire circumferential extension of said anchoring portion, connecting portion and terminal portion.

Preferably, the proximal part of the annular lamina is anchored to the anchoring portion near a peripheral surface of the latter.

Preferably, the proximal part of the annular lamina is anchored to the anchoring portion near a radially internal peripheral surface of the latter.

Preferably, the intermediate part is anchored to the connecting portion at one of its lateral surfaces.

Preferably, the intermediate part of the annular lamina is anchored to said connecting portion near a lateral surface of the latter facing the anchoring portion.

Preferably, the distal part and the intermediate part are placed on opposite sides of the gasket, respectively.

Preferably, the distal part of the annular lamina is anchored to the terminal portion near a peripheral surface of the latter facing the connecting portion.

Preferably, the distal part of the annular lamina is anchored to the terminal portion near a radially external peripheral surface of the latter.

Preferably, the distal part of the annular lamina is anchored to the terminal portion near a peripheral surface of the latter facing a lateral surface of the connecting portion opposite the lateral surface carrying the intermediate part.

Preferably, said proximal part, intermediate part and distal part of the annular lamina follow one another to define a substantially S-shaped extension in a diametral section plane containing the central axis.

Two joint points are thus defined in the connecting sections of the intermediate part with the proximal and distal parts, which cooperate in accommodating the deformations of the gasket in response to variations in eccentricity.

Preferably, the annular lamina, at least partially made of metal material, is joined to the anchoring portion, connecting portion and terminal portion, at least partially made of elastomeric material, by rubber-metal coupling.

Preferably, the intermediate part is interconnected with at least one of said proximal part and distal part by at least one curvilinear connecting section. The distal and proximal part of the lamina can thus be respectively positioned in a radially external and internal position, or vice versa, to the anchoring portion and, respectively, to the terminal portion.

Preferably, the intermediate part and the distal part are mutually interconnected by means of a curvilinear connecting section crossing the thickness of the connecting portion in a transition zone between the latter and the terminal section.

It is thus possible to place the terminal art on the opposite side of the terminal portion with respect to the sealing edge.

Preferably, the annular reinforcement elastic lamina has circumferential segments mutually delimited by circumferentially distributed radial notches.

The segmentation of the lamina facilitates the anchoring thereof for the purposes of incorporation in the gasket, and determines a better adaptability to deformations due to the possible eccentricity of the shaft. By appropriately selecting the shape, size and positioning of the notches during the design phase, it is also possible to modulate the rigidity of the lamina and the gasket according to needs.

Preferably, the radial notches comprise first notches each interposed between two second notches along the circumferential extension of the elastic reinforcement annular lamina.

Preferably, the radial notches comprise first notches each extending through the distal part, at least partially through the intermediate part, and through a connecting section therebetween.

Preferably, the first notches entirely cross the intermediate part and at least partially extend through the proximal part.

Preferably, the radial notches comprise second notches each extending through the proximal part, at least partially through the intermediate part, and through a connecting section therebetween.

Preferably, the second notches entirely cross the intermediate part and at least partially extend through the distal part.

The presence of the notches also makes it possible to directly join the elastomers forming the connecting portion and the terminal and/or proximal portion, even where they are placed on respectively opposite sides of the lamina.

Preferably, in a rest condition the terminal portion extends according to an inclined trend with respect to the central axis, according to an angle less than 30°.

Preferably, in an operating condition the gasket circumscribes a rotary shaft and the terminal portion operates on a cylindrical surface by means of the sealing edge.

Preferably, in an operating condition the terminal portion is substantially parallel to the central axis.

Preferably, in the operating condition the terminal portion is radially movable to accommodate radial movements of the shaft with respect to the central axis, maintaining an orientation thereof substantially unchanged with respect to the central axis itself.

Preferably, in the operating condition the proximal lateral surface of the connecting portion is subjected to a higher pressure than that present on the opposite distal lateral surface.

Preferably, said at least one sealing edge is configured to operate in a sliding contact relationship against a diametrically external surface of a rotary shaft.

Preferably, said anchoring portion and said sealing edge define respectively opposite diametral ends of the sealing gasket.

Preferably, said anchoring portion and said sealing edge respectively define a radially external edge and a radially internal edge of the sealing gasket.

Preferably, one of said anchoring portion and sealing edge defines a minimum diameter of the sealing gasket, while the other of said anchoring portion and sealing edge defines a maximum diameter of the sealing gasket.

Preferably, said anchoring portion is configured to engage in an anchoring seat defined in a load-bearing structure rotatably crossed by a rotary shaft. Preferably, the connecting portion is elastically deformable to accommodate radial movements of the terminal portion with respect to the central axis.

Preferably, the terminal portion further has at least one auxiliary sealing edge axially spaced from the sealing edge.

The presence of two or more sealing edges, in addition to increasing the reliability in terms of hermetic seal, favours the maintenance of a stable orientation of the terminal portion in operating conditions.

Preferably, after the engagement of the annular lamina the first elastomeric charge is interposed between the circumferential wall of the moulding cavity and the distal part of the annular lamina.

Preferably, with the closure of the mould, the third charge is joined to the first charge through present radial notches of a connecting section between the intermediate part and the distal part of the annular lamina, facing the base portion.

Preferably, during the pressing of the elastomeric charges at least one constraining undercut is formed between the gasket and the closing portion of the mould.

Preferably, the vulcanized gasket remains engaged with the closing portion while moving the latter away from the base portion.

Further features and advantages will become more apparent from the detailed description of a preferred, yet not limiting, embodiment of a sealing gasket for rotary shafts, and a process for the creation thereof, according to the present invention.

Further features and advantages will become more apparent from the detailed description of a preferred, yet not limiting, embodiment of a sealing gasket for rotary shafts, and a process for the creation thereof, according to the present invention.

Such a description will be set forth hereinafter with reference to the accompanying drawings given only for illustrative and, therefore, nonlimiting purpose, in which:
- figure 1 shows an interrupted perspective and diametral section view of a sealing gasket in accordance with the present invention, in the rest condition;
- figure 2 shows the gasket of figure 1 from a different perspective angle;
- figure 3 shows an enlarged diametral section of the gasket of figure 1;
- figure 4 shows a detailed perspective view of an elastic reinforcement lamina integrated in the gasket;
- figure 5 shows the reinforcement lamina of figure 4 from a different perspective angle;
- figure 6 shows a diametral section of the gasket in an operating condition;
- figures 7 and 8 schematize, in diametral section, different operating conditions of the gasket of figure 6 as the eccentricity of the shaft changes;
- figures 9 and 10 show possible embodiments of the gasket in operating condition;
- figures 11 to 15 show a sequence of operating steps for making the gasket in a mould.

With reference to the mentioned figures, number 1 generally indicates a sealing gasket for rotary shafts, in accordance with the present invention.

The sealing gasket 1 is adapted to be mounted at an opening 2 obtained through a fixed wall forming part of a load-bearing structure 3. The opening 2 is rotatably crossed by a rotary shaft 4, to make a hermetic seal between a first and a second environment mutually separated from the fixed wall.

The gasket 1 has a plurality of annular portions 5, 7, 9 concentric with respect to a central axis X, preferably made of elastomeric material. More specifically, an anchoring portion 5 axially delimited by two axial delimiting surfaces 6, a terminal portion 7 carrying at least one sealing edge 8 radially protruding from the opposite side with respect to the anchoring portion 5, away from the same, and a connecting portion 9 radially interposed between the anchoring portion 5 and the terminal portion 7 are identifiable. The anchoring portion 5 and the sealing edge 8 define opposite diametral ends of the sealing gasket, respectively. In fact, one thereof defines a maximum diameter Dmax at a radially external edge of the sealing gasket 1, while the other thereof defines a minimum diameter Dmin at a radially internal edge thereof.

The anchoring portion 5 can integrate textile fibres and/or other reinforcement inserts, and have a substantially quadrangular profile in which the axial delimiting surfaces 6 preferably define a maximum axial dimension S of the sealing gasket.

For the purposes of the present disclosure, unless otherwise specified, the term "profile" referring to the gasket 1 or to a part thereof, means the peripheral shape of the same gasket or part thereof sectioned in a diametral geometric plane, containing the central axis X thereof.

In the illustrated example, the anchoring portion 5, placed in a radially external position and thus defining the maximum diameter Dmax of the gasket, is suitable to be engaged in an anchoring seat 10 defined in the load-bearing structure 3, for example by means of a closing flange 11 removably fixed so as to enclose the axial delimiting surfaces 6 against respective containment walls. In this circumstance, the anchoring portion 5 and the terminal portion 7 are respectively placed in a radially external and internal position with respect to the central axis X of the gasket, with the sealing edge 8 radially protruding towards the central axis X from a radially internal circumferential wall of the terminal portion 7, so that the anchoring portion 5 and the sealing edge 8 themselves respectively define the maximum diameter Dmax and the minimum diameter Dmin of the sealing gasket 1.

In at least one possible embodiment not illustrated, the anchoring portion 5 and the terminal portion 7 may however have mutually inverted positions with respect to what is illustrated, i.e., respectively placed in a radially internal and external position with respect to the central axis X of the sealing gasket 1.

The connecting portion 9 extends obliquely according to a continuous trend between the anchoring portion 5 and the terminal portion 7. In the connecting portion 9, two axially opposite lateral surfaces delimiting the thickness are therefore identifiable, respectively distinguished here in proximal lateral surface 12 and distal lateral surface 13, which each form an acute angle β1, β2 with the anchoring portion 5 and with the terminal portion 7, respectively. In the illustrated example, the proximal lateral surface 12 faces away from the central axis X, and forms a respective proximal acute angle β1 with a radially internal peripheral surface of the anchoring portion 5. The distal lateral surface 13 in turn faces the central axis X and forms a respective distal acute angle β2 with a radially external surface of the terminal portion 7.

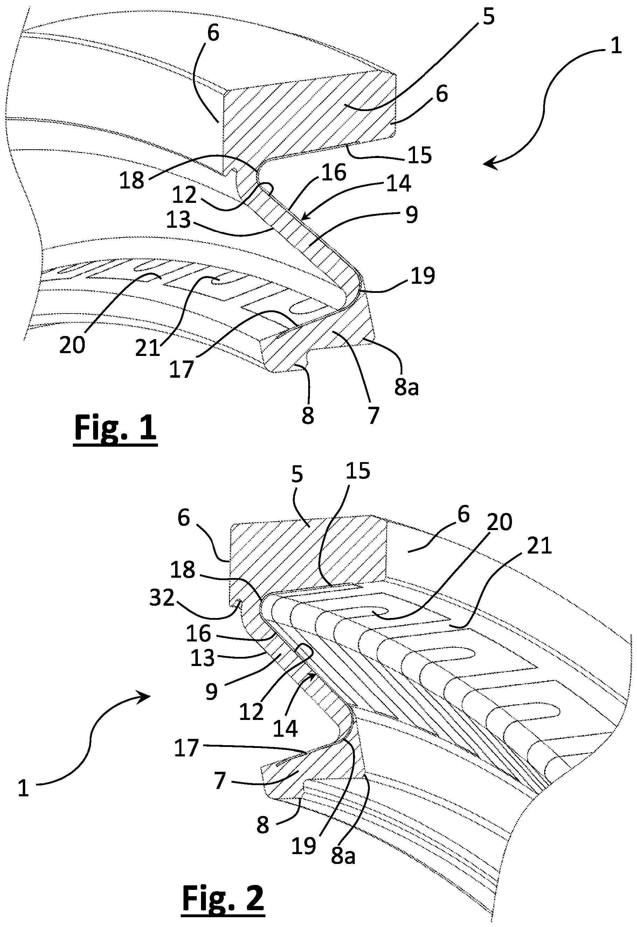

The terminal portion 7 extends from one radially internal and distal end of the connecting portion 9 with respect to the anchoring portion 5, and is radially movable with respect to the latter thanks to the deformability of the connecting portion 9. In fact, the connecting portion 9 is elastically deformable to accommodate radial movements of the terminal portion 7 with respect to the anchoring portion 5. In the example illustrated in figures 1 to 8, the terminal portion 7 also carries an auxiliary sealing edge 8a, axially spaced from the sealing edge 8.

The sealing gasket 1 further comprises at least one elastic reinforcement annular lamina 14, preferably in harmonic steel or other suitable metal material, having a plurality of annular parts 15, 16, 17 concentric with respect to the central axis X. Each of these parts is joined, for example by a usual rubber-metal coupling process, to one of said anchoring portion 5, elastic connecting portion 9 and terminal portion 7, and extends substantially according to the entire circumferential extension thereof.

More specifically, in the annular lamina 14 a proximal part 15, an intermediate part 16 and a distal part 17 are identifiable, respectively integral with said anchoring portion 5, connecting portion 9 and terminal portion 7. The proximal 15, intermediate 16 and distal 17 parts follow one another radially to define, in a diametral section plane containing the central axis X, a substantially S-shaped profile which substantially corresponds to the extension of the anchoring 5, connecting 9 and terminal 7 portions of the sealing gasket 1.

The proximal part 15 is integral with the anchoring portion 5, preferably near the radially internal peripheral surface of the latter, facing the terminal portion 7.

The distal part 17 is in turn anchored to the terminal portion 7, preferably near a radially external peripheral surface thereof, facing the anchoring portion 5.

The intermediate part 16 is anchored to the connecting portion 9 at one of its laterally opposite surfaces 12, 13, and is preferably interconnected to the proximal part 15 and to the distal part 17 by respective connecting sections 18, 19 preferably curvilinear. More in particular, in the illustrated example, a proximal connecting section 18 referring to the proximal part 15, and a distal connecting section 19 referring to the distal part 17 are identifiable.

At least one of the connecting sections 18, 19, in the illustrated example the distal connecting section 19, crosses the thickness of the connecting portion 9 in a transition zone between the latter and the respective terminal portion 7 or anchoring portion 5.

The intermediate part 16 is consequently anchored to the connecting portion 9 near its proximal lateral surface 12, opposite that which faces the distal part 17 fixed to the terminal portion 7. In the illustrated example, the intermediate part 16 is in fact arranged at the proximal lateral surface 12 facing the anchoring portion 5, while the distal part 17 is in turn placed near the radially external peripheral surface of the terminal portion 7, facing the distal lateral surface 13. In other words, the distal part 17 and the intermediate part 16 are located on respectively opposite sides of the sealing gasket 1, so that the side presenting the distal part 17 of the annular lamina 14 is devoid of the intermediate part 16, and vice versa.

It is conveniently included that the circumferential extension of the annular lamina 14 is fragmented into a plurality of circumferential segments, preferably interconnected with each other, mutually delimited by circumferentially distributed radial notches 20, 21.

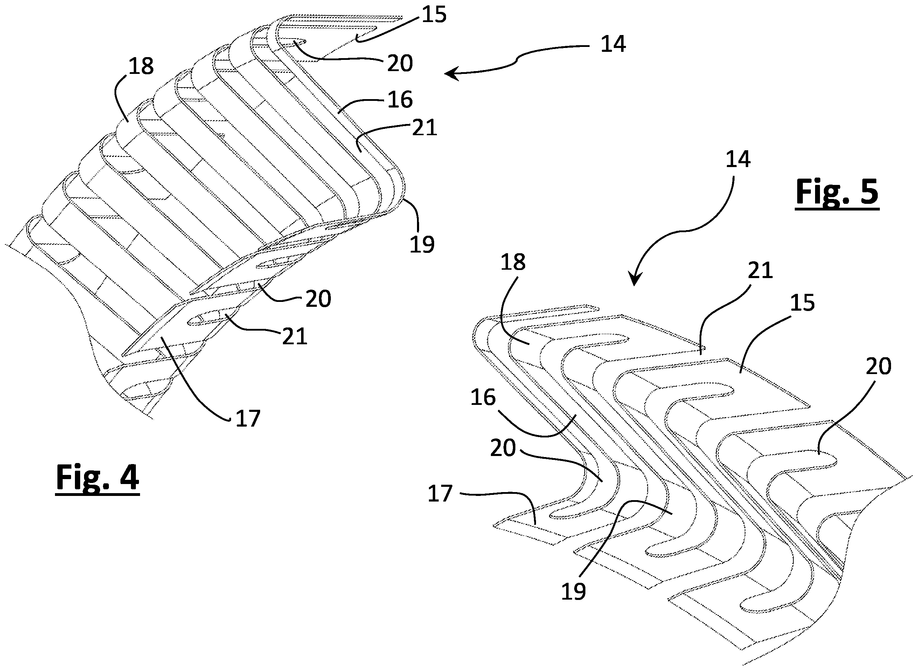

More in particular, as better seen in figures 4 and 5, first radial notches 20 and second radial notches 21 are identifiable in alternating sequences, so that each of the first notches 20 is interposed between two of the second notches 21 along the circumferential extension of the annular lamina 14.

Each of the first notches 20 extends through the distal part 17, at least partially through the intermediate part 16, and through the distal connecting section 19. Preferably, the first notches 20 entirely cross the distal part 17 and the intermediate part 16 and also a portion of the proximal part 15.

Each of the second radial notches 21 extends through the proximal part 15, through the proximal connecting section 18, and through at least one portion of the intermediate part 16. Preferably, the second notches entirely cross the proximal part 15 and intermediate part 16, and a portion of the proximal part 15.

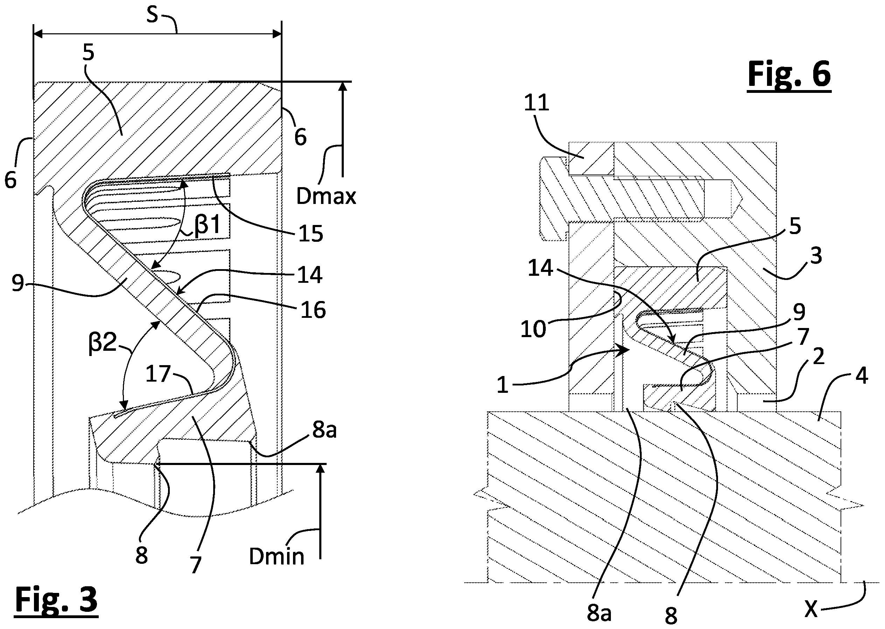

As can be better seen in figure 3, in a rest condition, i.e., with the gasket not mounted, the terminal portion 7 of the gasket, as well as the distal portion of the annular lamina 14, can have an inclined trend with respect to the central axis X, indicatively according to an angle of less than 30°.

In this circumstance, the maximum diameter Dmax defined by the anchoring portion 5 can be slightly larger than the internal diameter of the anchoring seat 10, and/or the minimum diameter Dmin defined by the sealing edge 8 can differ slightly from the external diameter of the shaft 4 on which the sealing gasket 1 is to be fitted. In an operating condition, the anchoring portion 5 is enclosed and compressed in the anchoring seat 10.

When the sealing gasket 1 is fitted in an operating condition around the shaft 4, for example as shown in figures 6 to 10, the terminal portion 7 assumes an orientation substantially parallel to the central axis X and, by means of its sealing edge 8, works in a sliding contact relationship against a cylindrical surface of the shaft itself (in the case illustrated) or obtained in the support structure (in the case where the gasket is fitted on the shaft 4 by means of its anchoring portion 5) in a sliding contact relationship. **In** this circumstance, the terminal portion 7 is radially movable with respect to the anchoring portion 5 to accommodate any eccentricities, misalignments and/or radial movements of the shaft 4, keeping its orientation substantially unchanged with respect to the central axis X.

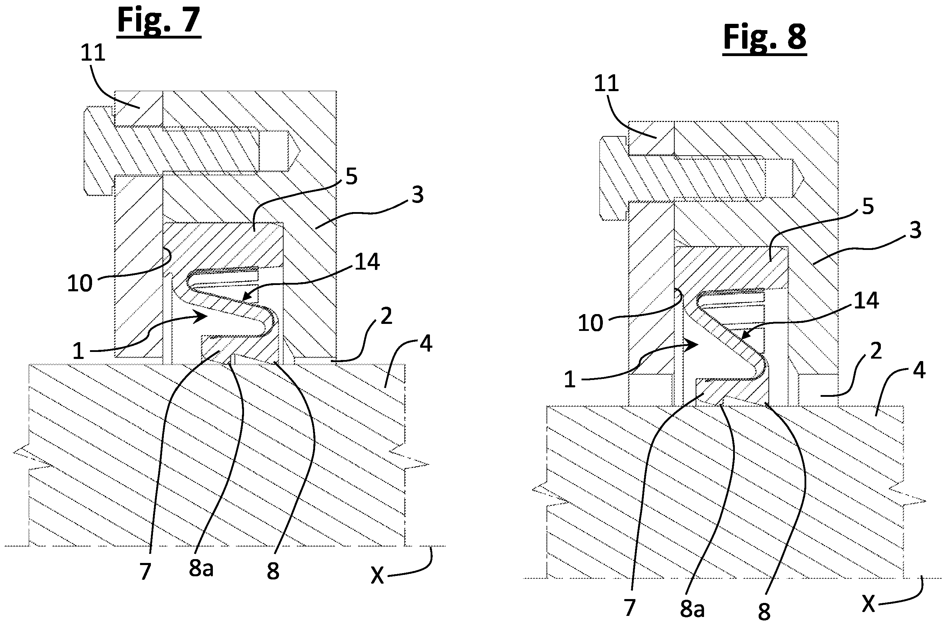

**In** this respect, a comparison between figures 6 to 8 makes the behaviour of the terminal portion 7 gasket in response to different radial positions of the shaft 4 with respect to the anchoring portion 5 evident. More in particular, figure 6 shows a nominal operating condition, in which the rotation axis of the shaft 4 coincides with the central axis X. Figure 7 shows a condition in which the shaft 4 is radially offset with respect to the central axis X, towards the anchoring portion 5. Figure 8 in turn shows a situation contrary to figure 7, in which the shaft 4 is radially offset away from the anchoring portion 5. It is easy to observe how in both operating situations, the terminal portion 7 maintains its parallelism substantially unchanged with respect to the external surface of the shaft 4 on which the sealing edge 8 restingly acts. This behaviour, favoured by the geometric features of the annular portions 5, 7, 9 and by their cooperation with the annular lamina 14, results in a greater aptitude to maintain the ideal working conditions unaltered for each sealing edge 8, without significantly modifying the contact pressure of the same against the cylindrical surface, to the advantage of reliability in terms of hermetic seal and the absence of localized pressure variations which could cause undesired friction phenomena, with consequent wear, overheating and energy losses.

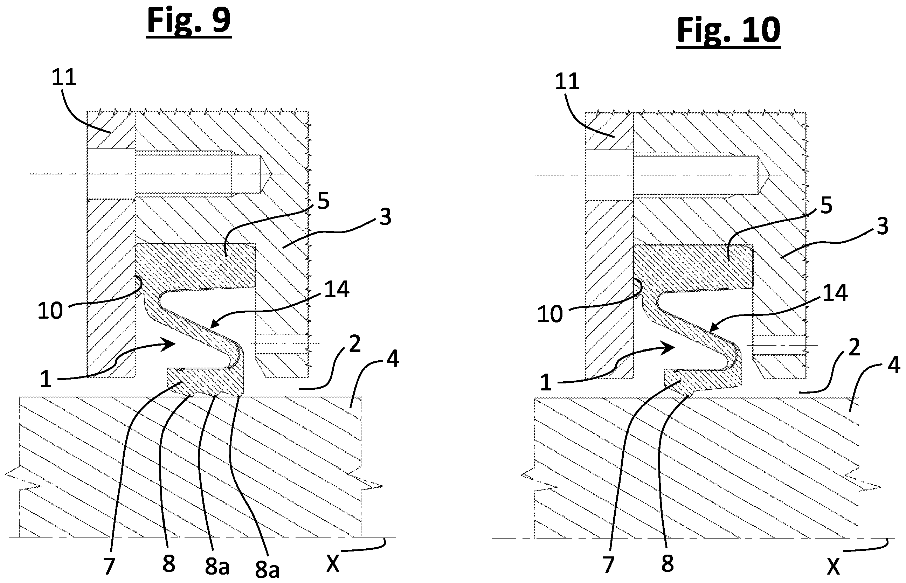

Figures 9 and 10 show some embodiments of the gasket. **In** figure 9 there are two auxiliary sealing edges 9b, for a total of three sealing edges, while in figure 10 there is a single sealing edge 8, positioned at one end of the terminal portion 7 opposite the connecting portion 9.

As a person skilled in the art can easily deduce from the figures, when the sealing gasket 1 is in the operating condition the proximal lateral surface 12 of the connecting portion 9 is facing the fixed wall of the load-bearing structure 3 at which the opening 2 is obtained, i.e., towards the so-called "oil side" which houses the pressurized lubricating fluid, and therefore tends to be subjected to a higher pressure than that present on the opposite distal lateral surface 13, normally at atmospheric pressure. This pressure gradient determines a radially directed force component towards the shaft 4, so as to favour the contact of the terminal portion 7 against the latter.

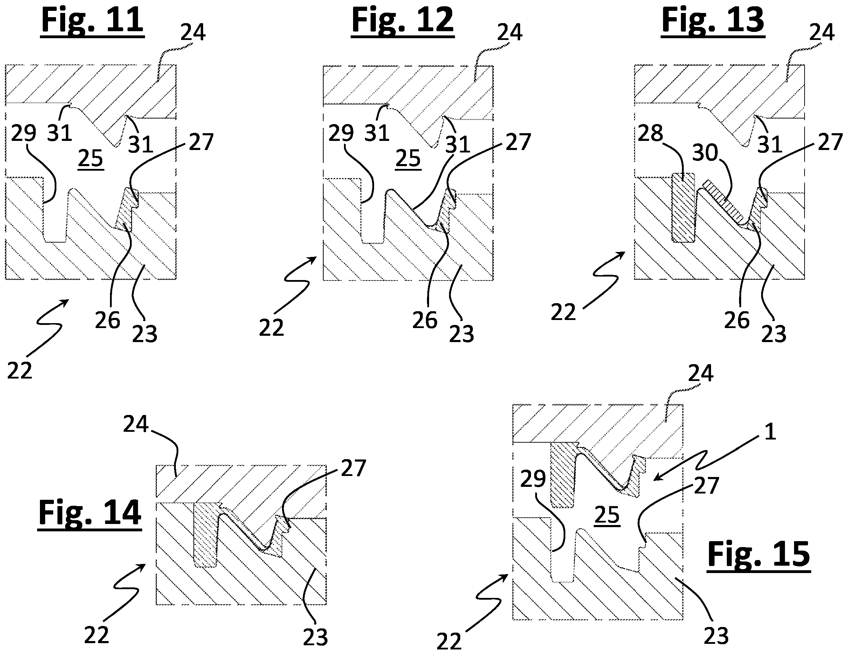

With reference to figures 11 to 15, the sealing gasket 1 is conveniently achievable by means of a mould 22 having a base portion 23 and a closing portion 24 mutually approachable to close a moulding cavity 25 counter-shaped to the sealing gasket itself.

In accordance with a process according to the present invention, in the base portion 23 of the mould 22 a first elastomeric charge 26 is introduced, positioning it as shown in figure 11 near a first circumferential wall 27 of the moulding cavity 25, intended to form the terminal portion 7 of the sealing gasket 1 with the respective sealing edge or edges 8a, 8b.

Subsequently, in the base portion 23 of the mould 22 the elastic reinforcement annular lamina 14 is engaged, with its distal part 17 leaning on the first elastomeric charge 26 as shown in figure 12. Upon engagement, the first elastomeric charge 26 is interposed between the circumferential wall of the moulding cavity 25 and the distal portion 17 of the annular lamina 14.

A second elastomeric charge 28 is then introduced in the moulding cavity 25, possibly in combination with fibres or other reinforcement elements of a textile or metal nature. As can be seen in figure 13, upon insertion the second elastomeric charge 28, intended to form the anchoring portion 5, is at least partially interposed between the proximal part 15 of the annular lamina 14 and a second circumferential wall 29 of the moulding cavity 25, radially opposite with respect to the first circumferential wall 27. After the insertion of the annular lamina 14 (before, after or simultaneously with the introduction of the second elastomeric charge 28) a third elastomeric charge 30 can be inserted substantially resting against the intermediate part 16 of the annular lamina itself, to form the connecting portion 9 of the sealing gasket 1.

The closure of the mould 22 is then determined by approaching the closing portion 24 to the base portion 23. In this step the elastomeric charges 26, 28, 30 are pressed in the moulding cavity 25, mutually joined and shaped according to the shape of the moulding cavity 25 itself. More in particular, with the closure of the mould 22, the third elastomeric charge 30 joins the second elastomeric charge 28 at the proximal connecting section 18 facing the closing portion 24. At the same time, the material forming the third elastomeric charge 30 joins the first charge 26 through the radial notches 20, 21 present in the distal connecting section 19, facing the base portion 23.

The elastomeric charges 26, 28, 30 initially introduced in the raw state inside the mould 22 and pressed following the closure of the latter, are subjected to a vulcanization treatment by administering a predetermined amount of heat, for a predetermined time and at a predetermined temperature, in order to determine a molecular crosslinking with consequent geometric and structural stabilization of the sealing gasket 1.

In the closing portion 24 of the mould 22, one or more circumferential projections and/or recesses 31 can be conveniently arranged which are suitable to define, inside the moulding cavity 25 and consequently on the sealing gasket 1, at least one constraining undercut 32 (figure 2) oriented transversely to the mutual movement direction of the base 23 and closing 24 portions of the mould 22 to constrain the closing portion 24 to the sealing gasket 1 formed following the pressing operation. The use of these circumferential projections and/or recesses 31 and the undercuts 32 formed therefrom on the sealing gasket 1 can also be conveniently included regardless of the features of the gasket described above.

The presence of the constraining undercuts 32, placed, for example, in the junction area between the connecting portion 9 and the anchoring portion 5 and/or at one end of the terminal portion 7, causes the vulcanized gasket 1 to remain engaged at the closing portion 24 during the subsequent removal of the latter from the base portion 23 upon completion of vulcanization, so as to facilitate the extraction of the sealing gasket 1 from the moulding cavity 25.

## Claims

1. Sealing gasket for rotary shafts, having a plurality of annular portions (5, 7, 9) concentric with respect to a central axis (X), wherein said annular portions (5, 7, 9) comprise:
an anchoring portion (5) axially delimited by two axial delimiting surfaces (6);
a connecting portion (9) extending obliquely from the anchoring portion (5);
a terminal portion (7) extending from one end of the connecting portion (9) radially distal with respect to the anchoring portion (5), wherein said terminal portion (7) is radially movable with respect to the anchoring portion (5) and carries at least one radially protruding sealing edge (8);
wherein axially opposite lateral surfaces (12, 13) of the connecting portion (9) each form an acute angle with the anchoring portion (5) and with the terminal portion (7), respectively;
said sealing gasket (1) further comprising an elastic reinforcement annular lamina (14) having a plurality of annular parts concentric with respect to the central axis (X), wherein said annular parts comprise a proximal part (15) integral with the anchoring portion (5), an intermediate part (16) integral with the connecting portion (9) and a distal part (17) integral with the terminal portion (7),
**characterized in that** the intermediate part (16) is interconnected with at least one of said proximal part (15) and distal part (17) by at least one connecting section (18, 19) crossing the thickness of the connecting portion (9) in a transition zone between the latter and the respective terminal portion (7) or anchoring portion (5).

2. Sealing gasket according to claim 1, wherein the intermediate part (16) of the annular lamina (14) is anchored to the connecting portion (9) at one of said axially opposite lateral surfaces (12, 13).

3. Sealing gasket according to claim 2, wherein, the intermediate part (16) of the annular lamina (14) is anchored to the connecting portion (9) on a proximal lateral surface (12) facing the anchoring portion (5).

4. Sealing gasket according to one or more of the preceding claims, wherein the distal part (17) of the annular lamina (14) is anchored to the terminal portion (7) near a peripheral surface of the latter facing the connecting portion (9).

5. Sealing gasket according to claim 2 or 3, wherein the distal part (17) of the annular lamina (14) is anchored to the terminal portion (7) near a peripheral surface thereof facing a lateral surface (13) of the connecting portion (9) opposite the lateral surface (12) carrying the intermediate part (16).

6. Sealing gasket according to one or more of the preceding claims, wherein said proximal part (15), intermediate part (16) and distal part (17) of the annular lamina (14) follow each other to define a substantially S-shaped extension in a diametral section plane containing the central axis (X).

7. Sealing gasket according to one or more of the preceding claims, wherein the annular lamina (14) has circumferential segments mutually delimited by first notches (20) each extending through the distal part (17), at least partially through the intermediate part (16), and through a connecting section (19) therebetween.

8. Sealing gasket according to claim 7, wherein the annular lamina (14) further has second notches (21) each extending through the proximal part (15), the intermediate part (16) and a portion of the distal part (17).

9. Sealing gasket according to one or more of the preceding claims, wherein in an operating condition the terminal portion (7) is radially movable in response to radial misalignments of the shaft (4) with respect to the central axis (X), maintaining substantially unchanged its own orientation with respect to the central axis (X) itself.

10. Sealing gasket according to one or more of the preceding claims, wherein the terminal portion (7) further has at least one auxiliary sealing edge (8a) axially spaced from the sealing edge (8).

11. Sealing gasket according to one or more of the preceding claims, wherein in an operating condition the terminal portion (7) is substantially parallel to the central axis (X).

12. Sealing gasket according to one or more of the preceding claims, wherein in the operating condition the proximal lateral surface of the connecting portion is subjected to a higher pressure than that present on the opposite distal lateral surface.

13. Process for making a sealing gasket for rotary shafts, comprising:
providing a mould (22) having a base portion (23) and a closing portion (24) mutually approachable to close a moulding cavity (25) counter-shaped to the sealing gasket (1);
introducing a first elastomeric charge (26) in the base portion (23) of the mould (22), leaning it against a first circumferential wall (27) of the moulding cavity (25);
engaging an elastic reinforcement annular lamina (14) in the base portion (23) of the mould (22), with a distal part (17) of the annular lamina (14) facing the first elastomeric charge (26);
introducing in the base portion (23) at least a second elastomeric charge (28), at least partially interposed between a proximal part (15) of the annular lamina (14) and a circumferential wall (29) of the moulding cavity (25), radially opposite with respect to the first circumferential wall (27);
further comprising introducing in the base portion (23), after the engagement of the annular lamina (14), a third elastomeric charge (30) arranged against an intermediate part (16) of the annular lamina (14) extending between the proximal part (15) and the distal part (17);
closing the mould (22) by approaching the closing portion (24) to the base portion (23) for pressing the elastomeric charges, joining them mutually and shaping them according to the shape of the moulding cavity (25), wherein with the closing of the mould (22) the third elastomeric charge (30), facing the closing portion (24), joins the second elastomeric charge (28) at a connecting section (18) between the proximal part (15) and the intermediate part (16) of the annular lamina (14);
vulcanizing the elastomeric charges in the closed mould (22);
moving the closing portion (24) away from the base portion (23) to allow the extraction of the gasket (1) from the moulding cavity (25).

14. Process according to claim 13, wherein with the closure of the mould (22), the third elastomeric charge (30) joins the first elastomeric charge (26) through radial notches (20, 21) included in a connecting section (19) between the intermediate part (16) and the distal part (17) of the annular lamina (14).

15. Process according to claim 13 or 14, wherein during the pressing of the elastomeric charges at least one constraining undercut (32) is formed between the sealing gasket (1) and the closing portion (24) of the mould (22).

## Patentansprüche

1. Dichtung für rotierende Wellen mit einer Vielzahl von ringförmigen Abschnitten (5, 7, 9), die im Verhältnis zu einer Mittelachse (X) konzentrisch sind, wobei die ringförmigen Abschnitte (5, 7, 9) Folgendes umfassen:
einen Verankerungsabschnitt (5), der axial von zwei axialen Begrenzungsflächen (6) begrenzt wird;
einen Verbindungsabschnitt (9), der von dem Verankerungsabschnitt (5) aus schräg verläuft;
einen Endabschnitt (7), der von einem Ende des Verbindungsabschnitts (9) im Verhältnis zu dem Verankerungsabschnitt (5) radial distal verläuft, wobei der genannte Endabschnitt (7) im Verhältnis zu dem Verankerungsabschnitt (5) radial beweglich ist und mindestens eine radial vorstehende Dichtungskante (8) trägt;
wobei axial gegenüberliegende Seitenflächen (12, 13) des Verbindungsabschnitts (9) jeweils einen spitzen Winkel mit dem Verankerungsabschnitt (5) und mit dem Endabschnitt (7) bilden;
wobei die genannte Dichtung (1) außerdem eine elastische ringförmige Verstärkungslamelle (14) mit einer Vielzahl von ringförmigen Teilen aufweist, die im Verhältnis zu der Mittelachse (X) konzentrisch sind, wobei die genannten ringförmigen Teile einen proximalen Teil (15), der fest mit dem Verankerungsabschnitt (5) verbunden ist, einen Zwischenteil (16), der fest mit dem Verbindungsabschnitt (9) verbunden ist, und einen distalen Teil (17), der fest mit dem Endabschnitt (7) verbunden ist, aufweisen,
**dadurch gekennzeichnet, dass** der Zwischenteil (16) mit mindestens einem von dem genannten proximalen Teil (15) und dem distalen Teil (17) durch mindestens einen Verbindungsabschnitt (18, 19) verbunden ist, der die Dicke des Verbindungsabschnitts (9) in einem Übergangsbereich zwischen Letzterem und dem jeweiligen Endabschnitt (7) oder Verankerungsabschnitt (5) überquert.

2. Dichtung nach Anspruch 1, wobei der Zwischenteil (16) der ringförmigen Lamelle (14) an einer der genannten axial gegenüberliegenden Seitenflächen (12, 13) an dem Verbindungsabschnitt (9) verankert ist.

3. Dichtung nach Anspruch 2, wobei der Zwischenteil (16) der ringförmigen Lamelle (14) an einer proximalen Seitenfläche (12), die dem Verankerungsabschnitt (5) gegenüberliegt, an dem Verbindungsabschnitt (9) verankert ist.

4. Dichtung nach einem oder mehreren der vorangegangenen Ansprüche, wobei der distale Teil (17) der ringförmigen Lamelle (14) an dem Endabschnitt (7) in der Nähe einer dem Verbindungsabschnitt (9) gegenüberliegenden Umfangsfläche des Letzteren verankert ist.

5. Dichtung nach Anspruch 2 oder 3, wobei der distale Teil (17) der ringförmigen Lamelle (14) an dem Endabschnitt (7) in der Nähe einer Umfangsfläche desselben verankert ist, die einer Seitenfläche (13) des Verbindungsabschnitts (9) gegenüber der Seitenfläche (12), die den Zwischenteil (16) trägt, gegenüberliegt.

6. Dichtung nach einem oder mehreren der vorangegangenen Ansprüche, wobei der genannte proximale Teil (15), Zwischenteil (16) und distale Teil (17) der ringförmigen Lamelle (14) aufeinanderfolgen, um eine im Wesentlichen S-förmige Verlängerung in einer diametralen Schnittebene zu definieren, die die Mittelachse (X) enthält.

7. Dichtung nach einem oder mehreren der vorangegangenen Ansprüche,
wobei die ringförmige Lamelle (14) Umfangssegmente aufweist, die gegenseitig durch erste Kerben (20) begrenzt sind, von denen jede durch den distalen Teil (17), mindestens teilweise durch den Zwischenteil (16) und durch einen dazwischen liegenden Verbindungsabschnitt (19) verläuft.

8. Dichtung nach Anspruch 7, wobei die ringförmige Lamelle (14) außerdem zweite Kerben (21) aufweist, von denen jede durch den proximalen Teil (15), den Zwischenteil (16) und einen Abschnitt des distalen Teils (17) verläuft.

9. Dichtung nach einem oder mehreren der vorangegangenen Ansprüche, wobei der Endabschnitt (7) in einem Betriebszustand als Reaktion auf radiale Ausrichtungsfehler der Welle (4) im Verhältnis zur Mittelachse (X) radial beweglich ist und dabei seine eigene Ausrichtung im Verhältnis zur Mittelachse (X) im Wesentlichen unverändert beibehält.

10. Dichtung nach einem oder mehreren der vorangegangenen Ansprüche, wobei der Endabschnitt (7) außerdem mindestens eine zusätzliche Dichtungskante (8a) aufweist, die sich axial zu der Dichtungskante (8) im Abstand befindet.

11. Dichtung nach einem oder mehreren der vorangegangenen Ansprüche, wobei der Endabschnitt (7) in einem Betriebszustand im Wesentlichen parallel zu der Mittelachse (X) ist.

12. Dichtung nach einem oder mehreren der vorangegangenen Ansprüche, wobei die proximale Seitenfläche des Verbindungsabschnitts im Betriebszustand einem höheren Druck ausgesetzt ist als dem an der gegenüberliegenden distalen Seitenfläche vorhandenen.

13. Verfahren zur Herstellung einer Dichtung für rotierende Wellen, umfassend:
Bereitstellen einer Form (22) mit einem Basisabschnitt (23) und einem Schließabschnitt (24), die aneinander angenähert werden können, um eine Formkavität (25) zu schließen, die ein Gegenprofil zu der Dichtung (1) bildet;
Einbringen einer ersten Elastomerfüllung (26) in den Basisabschnitt (23) der Form (22), wobei diese gegen eine erste Umfangswand (27) der Formkavität (25) gelehnt wird;
Einsetzen einer elastischen ringförmigen Verstärkungslamelle (14) in den Basisabschnitt (23) der Form (22), wobei ein distaler Teil (17) der ringförmigen Lamelle (14) der ersten Elastomerfüllung (26) gegenüberliegt;
Einbringen mindestens einer zweiten Elastomerfüllung (28) in den Basisabschnitt (23), die mindestens teilweise zwischen einem proximalen Teil (15) der ringförmigen Lamelle (14) und einer Umfangswand (29) der Formkavität (25),
im Verhältnis zu der ersten Umfangswand (27) radial gegenüberliegend, eingefügt ist;
außerdem umfassend das Einbringen einer dritten Elastomerfüllung (30) in den Basisabschnitt (23) nach dem Einsetzen der ringförmigen Lamelle (14), die gegen einen Zwischenteil (16) der ringförmigen Lamelle (14) angeordnet ist, der zwischen dem proximalen Teil (15) und dem distalen Teil (17) verläuft;
Schließen der Form (22) durch Annähern des Schließabschnitts (24) an den Basisabschnitt (23), um die Elastomerfüllungen zusammenzupressen, sie miteinander zu verbinden und sie entsprechend der Gestalt der Formkavität (25) zu formen, wobei sich durch das Schließen der Form (22) die dritte Elastomerfüllung (30), die dem Schließabschnitt (24) gegenüberliegt, mit der zweiten Elastomerfüllung (28) an einem Verbindungsabschnitt (18) zwischen dem proximalen Teil (15) und dem Zwischenteil (16) der ringförmigen Lamelle (14) verbindet;
Vulkanisieren der Elastomerfüllungen in der geschlossenen Form (22);
Wegbewegen des Schließabschnitts (24) von dem Basisabschnitt (23), um das Entnehmen der Dichtung (1) aus der Formkavität (25) zu ermöglichen.

14. Verfahren nach Anspruch 13, wobei durch das Schließen der Form (22) die dritte Elastomerfüllung (30) mit der ersten Elastomerfüllung (26) durch radiale Kerben (20, 21) verbunden wird, die in einem Verbindungsabschnitt (19) zwischen dem Zwischenteil (16) und dem distalen Teil (17) der ringförmigen Lamelle (14) enthalten sind.

15. Verfahren nach Anspruch 13 oder 14, wobei während des Zusammenpressens der Elastomerfüllungen mindestens eine einschränkende Hinterschneidung (32) zwischen der Dichtung (1) und dem Schließteil (24) der Form (22) gebildet wird.

## Revendications

1. Garniture de scellement pour arbres rotatifs, ayant une pluralité de parties annulaires (5, 7, 9) concentriques par rapport à un axe central (X), dans laquelle lesdites parties annulaires (5, 7, 9) comprennent :
une partie d'ancrage (5) délimitée de façon axiale par deux surfaces de délimitation axiale (6) ;
une partie de liaison (9) s'étendant obliquement à partir de la partie d'ancrage (5) ;
une partie terminale (7) s'étendant à partir d'une extrémité de la partie de liaison (9) radialement distale par rapport à la partie d'ancrage (5), dans laquelle ladite partie terminale (7) est mobile radialement par rapport à la partie d'ancrage (5) et porte au moins un bord d'étanchéité (8) faisant radialement saillie ;
dans laquelle des surfaces latérales opposées de façon axiale (12, 13) de la partie de liaison (9) forment chacune un angle aigu avec la partie d'ancrage (5) et avec la partie terminale (7), respectivement ;
ladite garniture de scellement (1) comprenant en outre une lame annulaire (14) de renforcement élastique ayant une pluralité de parties annulaires concentriques par rapport à l'axe central (X), dans laquelle lesdites parties annulaires comprennent une partie proximale (15) solidaire de la partie d'ancrage (5), une partie intermédiaire (16) solidaire de la partie de liaison (9) et une partie distale (17) solidaire de la partie terminale (7),
**caractérisée en ce que** la partie intermédiaire (16) est interconnectée avec au moins une desdites partie proximale (15) et partie distale (17) par l'intermédiaire d'au moins une section de liaison (18, 19) traversant l'épaisseur de la partie de liaison (9) dans une zone de transition entre cette dernière et la partie terminale (7) ou la partie d'ancrage (5) respectives.

2. Garniture de scellement selon la revendication 1, dans laquelle la partie intermédiaire (16) de la lame annulaire (14) est ancrée à la partie de liaison (9) au niveau de l'une des surfaces latérales opposées de façon axiale (12, 13).

3. Garniture de scellement selon la revendication 2, dans laquelle la partie intermédiaire (16) de la lame annulaire (14) est ancrée à la partie de liaison (9) sur une surface latérale proximale (12) faisant face à la partie d'ancrage (5).

4. Garniture de scellement selon une ou plusieurs des revendications précédentes, dans laquelle la partie distale (17) de la lame annulaire (14) est ancrée à la partie terminale (7) près d'une surface périphérique de cette dernière faisant face à la partie de liaison (9).

5. Garniture de scellement selon la revendication 2 ou 3, dans laquelle la partie distale (17) de la lame annulaire (14) est ancrée à la partie terminale (7) près d'une surface périphérique de celle-ci faisant face à une surface latérale (13) de la partie de liaison (9) opposée à la surface latérale (12) portant la partie intermédiaire (16).

6. Garniture de scellement selon une ou plusieurs des revendications précédentes,
dans laquelle lesdites parties proximale (15), intermédiaire (16) et distale (17) de la lame annulaire (14) se succèdent l'une après l'autre pour définir une extension sensiblement en forme de S dans un plan de section diamétrale contenant l'axe central (X).

7. Garniture de scellement selon une ou plusieurs des revendications précédentes,
dans laquelle la lame annulaire (14) présente des segments circonférentiels mutuellement délimités par des premières encoches (20) s'étendant chacune à travers la partie distale (17), au moins partiellement à travers la partie intermédiaire (16), et à travers une section de liaison (19) entre les deux.

8. Garniture de scellement selon la revendication 7, dans laquelle la lame annulaire (14) présente en outre des secondes encoches (21) s'étendant chacune à travers la partie proximale (15), la partie intermédiaire (16) et une partie de la partie distale (17).

9. Garniture de scellement selon une ou plusieurs des revendications précédentes, dans laquelle, dans un état de fonctionnement, la partie terminale (7) est mobile radialement en réponse à des désalignements radiaux de l'arbre (4) par rapport à l'axe central (X), en maintenant sensiblement inchangée sa propre orientation par rapport à l'axe central (X).

10. Garniture de scellement selon une ou plusieurs des revendications précédentes, dans laquelle la partie terminale (7) comporte en outre au moins un bord d'étanchéité auxiliaire (8a) espacé axialement du bord d'étanchéité (8).

11. Garniture de scellement selon une ou plusieurs des revendications précédentes, dans laquelle, dans un état de fonctionnement, la partie terminale (7) est sensiblement parallèle à l'axe central (X).

12. Garniture de scellement selon une ou plusieurs des revendications précédentes, dans laquelle, en état de fonctionnement, la surface latérale proximale de la partie de liaison est soumise à une pression plus élevée que celle présente sur la surface latérale distale opposée.

13. Procédé de fabrication d'une garniture de scellement pour arbres rotatifs, consistant à :
fournir un moule (22) ayant une partie de base (23) et une partie de fermeture (24) pouvant être approchées mutuellement pour fermer une cavité de moulage (25) contre-profilée par rapport à la garniture de scellement (1) ;
introduire une première charge élastomère (26) dans la partie de base (23) du moule (22), en l'appuyant contre une première paroi circonférentielle (27) de la cavité de moulage (25) ;
mettre en prise une lame annulaire de renforcement élastique (14) dans la partie de base (23) du moule (22), avec une partie distale (17) de la lame annulaire (14) faisant face à la première charge élastomère (26) ;
introduire dans la partie de base (23) au moins une seconde charge élastomère (28), au moins partiellement interposée entre une partie proximale (15) de la lame annulaire (14) et une paroi circonférentielle (29) de la cavité de moulage (25),
radialement opposée à la première paroi circonférentielle (27) ;
consistant en outre à introduire dans la partie de base (23), après la mise en prise de la lame annulaire (14), une troisième charge élastomère (30) agencée contre une partie intermédiaire (16) de la lame annulaire (14) s'étendant entre la partie proximale (15) et la partie distale (17) ;
fermer le moule (22) en approchant la partie de fermeture (24) de la partie de base (23) pour presser les charges élastomères, en les unissant mutuellement et en les façonnant selon la forme de la cavité de moulage (25), dans lequel, lors de la fermeture du moule (22), la troisième charge élastomère (30), faisant face à la partie de fermeture (24), unit la seconde charge élastomère (28) au niveau d'une section de liaison (18) entre la partie proximale (15) et la partie intermédiaire (16) de la lame annulaire (14) ;
vulcaniser les charges élastomères dans le moule fermé (22) ;
éloigner la partie de fermeture (24) de la partie de base (23) pour permettre l'extraction de la garniture (1) de la cavité de moulage (25).

14. Procédé selon la revendication 13, dans lequel, lors de la fermeture du moule (22), la troisième charge élastomère (30) rejoint la première charge élastomère (26) par le biais des encoches radiales (20, 21) incluses dans une section de liaison (19) entre la partie intermédiaire (16) et la partie distale (17) de la lame annulaire (14).

15. Procédé selon la revendication 13 ou 14, dans lequel, pendant le pressage des charges élastomères, au moins une contre-dépouille de contrainte (32) est formée entre la garniture de scellement (1) et la partie de fermeture (24) du moule (22).
